# EUROPEAN PATENT SPECIFICATION

(11) **EP 2 064 509 B1**
(45) Date of publication and mention of the grant of the patent: **11.01.2017**
(21) Application number: 07800510.5
(22) Date of filing: 23.08.2007
(51) Int. Cl.: F28F 13/06, B21D 13/10, B21D 21/00, B23P 15/26, F28F 1/40, B21D 53/04, F28F 13/12, F28F 1/04

(54) **HEAT TRANSFER SURFACES WITH FLANGED APERTURES**
WÄRMEÜBERTRAGUNGSFLÄCHEN MIT FLANSCH-ÖFFNUNGEN
SURFACES DE TRANSFERT DE CHALEUR DOTÉES D'OUVERTURES À BRIDES

(30) Priority: 28.08.2006 CA 2557422
(43) Date of publication of application: 03.06.2009
(73) Proprietor: Dana Canada Corporation, Oakville, Ontario L6K 3E4 (CA)
(72) Inventor: SPERANDEI, Bryan, Mississauga, Ontario L5V 2Y2 (CA); EVANS, Bruce, Burlington, Ontario L7L 3C4 (CA); SO, Allan K., Mississauga, Ontario L5R 2C9 (CA); COTTON, James Scott, Burlington, Ontario L7L 2G4 (CA)
(74) Representative: Pfenning, Meinig & Partner mbB
(86) International application number: PCT/CA2007/001484
(87) International publication number: WO 2008/025131

(56) References cited:
- WO-A1-90/13785
- CA-A- 484 636
- CA-A- 484 636
- JP-A- H06 129 734
- US-A- 4 963 716
- US-A- 5 184 672
- US-A- 5 184 672
- US-A1- 2001 027 857
- US-A1- 2001 027 857
- US-A1- 2004 099 408
- US-B1- 6 378 605
- US-B1- 6 378 605

## Description

### FIELD OF THE INVENTION

This invention relates to heat exchangers, and in particular, to flow augmentation devices, such as fins, turbulizers or turbulators, used to increase heat transfer performance in heat exchangers.

### BACKGROUND OF THE INVENTION

In heat exchangers, particularly of the type used to heat or cool liquids such as oil, it is common to use flow augmentation devices to increase mixing or flow turbulence or impede the formation of boundary layers and thus improve the heat transfer efficiency of the heat exchangers. In the past, various types of expanded metal fins or turbulizers have been used. One common type is a corrugated fin where the corrugations are formed with a pattern of slits and the material of the corrugations is displaced laterally to produce offset openings. This produces a serpentine flow path through the turbulizer increasing turbulence and breaking up boundary layers.

Another type of turbulizer is shown in United States Patent No. 4,945,981 issued to Joshi. This patent shows the use of a louvered fin as a turbulizer. Louvered fins are commonly used on the air side of an air to liquid heat exchanger. In this Joshi patent, however, the louvered fin is located inside the heat exchanger tubes or channels that normally contain liquids, such as oils.

CA 484 636 relates to a heat exchanger having spaced parallel metallic plates forming walls for a fluid flow passage with an undulated metallic plate disposed in the passage, the undulated plate having parallel rows of closely spaced rectangular perforations. The undulated plate is positioned within the fluid flow passage so that the crests and dwells thereof contact the walls of the fluid passage. Tab-like fins associated with each perforation extend from either side of the undulated surface which provides additional fin surface. The undulated plate is arranged within the heat exchanger so that flow through the heat exchanger is generally parallel to the longitudinal axis of the crests/dwells of the undulated plate.

CA 484 636 does not disclose opposed peripheral edge portions of each of the perforations including respective flanges that extend outwardly from a single side of a planar fin forming said perforation, wherein the perforations are elongated, having a longitudinal axis extending in a direction transverse to the crests and wells of the udulated plate, and wherein the heat exchanger has a low pressure drop direction parallel to the planar fins and a high pressure drop direction transverse to the planar fins, the perforations being oriented in and the flanges extending in the high pressure drop direction.

US 6,378,605 relates to a heat exchanger comprising a series of fins arranged external to the fluid flow conduits or tubes of the heat exchanger. The fins are formed with a plurality of piercings or perforations thereby forming a highly porous fin surface wherein the size of the apertures or perforations is relatively small with respect to the fin surface itself. The porous fins are arranged so as to be generally parallel to the flow of the cooling fluid, i.e. a gas, over the exterior of tube-like conduits, the perforations or piercings therefore being arranged generally perpendicular to the direction of fluid flow.

US 6,378,605 does not disclose the fins being formed with spaced-apart apertures, wherein the apertures are elongated, having a longitudinal axis extending in a direction transverse to ridges formed by the fins, and wherein the heat exchanger has a low pressure drop direction parallel to the fins and a high pressure drop direction transverse to the fins, the piercings or perforations being oriented in and flanges formed by opposed peripheral edge portions of the piercings or perforations extending in the high pressure drop direction.

Some difficulties with expanded metal or louvered type turbulizers is that they produce undesirably high pressure drops or flow losses in the heat exchanger, or they produce an irregular or non-uniform flow pattern in the heat exchanger passages. This can produce stagnation in some areas of the heat exchanger, but even if this does not occur, a non-uniform flow profile generally indicates less than ideal heat transfer efficiency in the heat exchanger.

**SUMMARY OF THE INVENTION**

In the present invention, corrugated heat transfer surfaces have a plurality of spaced-apart apertures with opposed peripheral edge portions which include transverse flanges to enhance heat transfer efficiency.

According to one aspect of the invention, there is provided a heat transfer surface for a heat exchanger comprising a corrugated member having parallel, spaced-apart ridges and planar fins extending therebetween. The planar fins are formed with spaced-apart apertures having opposed peripheral edge portions. Also, the opposed peripheral edge portions of each aperture include respective flanges that extend outwardly from a single side of the planar fin forming said aperture.

The apertures are elongated, having a longitudinal axis extending in a direction transverse to the ridges. The heat transfer surface has a low pressure drop direction parallel to the planar fins and a high pressure drop direction transverse to the planar fins, the apertures being oriented in and the flanges extending in the high pressure drop direction.

According to another aspect of the invention, there is provided a heat exchanger comprising a generally flat tube having first and second spaced-apart walls. A corrugated heat transfer surface is located in the tube. The heat transfer surface includes parallel, spaced-apart ridges with planar fins extending therebetween. Alternating ridges are in contact respectively with the first and second walls. The planar fins are formed with spaced-apart apertures having opposed peripheral edge portions. Also, the opposed peripheral edge portions of each aperture include respective flanges extending outwardly away from a single side of the planar fin forming said apertures.

The tube has a longitudinal axis, the ridges of the heat transfer surface being oriented perpendicular to said longitudinal axis and flow through the tube being perpendicular to said ridges. The apertures are elongated, having a longitudinal axis extending in a direction transverse to the ridges and to the longitudinal flow direction the tube.

### BRIEF DESCRIPTION OF THE DRAWINGS

Preferred embodiments of the invention will now be described, by way of example, with reference to the accompanying drawings, in which:
Figure 1 is a perspective view of a heat exchanger or heat exchanger tube containing a preferred embodiment of a heat transfer surface according to the present invention;
Figure 2 is a perspective view of the heat transfer surface shown in Figure 1 taken from the front and from the left side;
Figure 3 is a front elevational view of the heat transfer surface shown in Figure 2;
Figure 4 is an enlarged side elevational view of the portion of Figure 2 indicated by chain-dotted circle 4;
Figure 5 is a perspective view similar to Figure 2, but showing another preferred embodiment of a heat transfer surface according to the present invention;
Figure 6 is an enlarged side elevational view of the portion of Figure 5 indicated by chain-dotted circle 6;
Figure 7 is a perspective view of a preferred configuration of a fin aperture according to the present invention;
Figure 8 is a perspective view of another preferred configuration of a fin aperture according to the present invention;
Figure 9 is a perspective view of yet further preferred configurations of fin apertures according to the present invention;
Figure 10 is a diagrammatic, cross-sectional view taken along lines 10-10 of either Figure 4 or Figure 6;
Figure 11 is a diagrammatic, cross-sectional view similar to Figure 10, but showing the fin apertures slightly offset;
Figure 12 is a diagrammatic, cross-sectional view similar to Figure 11, but showing the fin apertures offset a bit more;
Figure 13 is a diagrammatic, cross-sectional view similar to Figures 11 and 12, but showing the fin apertures fully offset;
Figure 14 is a diagrammatic, cross-sectional view similar to Figure 10, but showing the fin apertures having flanges of different widths and angles;
Figure 15 is a diagrammatic, cross-sectional view similar to Figure 14, but showing offset fin apertures and a higher fin density;
Figure 16 is a diagrammatic, cross-sectional view similar to Figure 10 showing fin apertures of different widths or sizes;
Figure 17 is a diagrammatic, cross-sectional view similar to Figure 10 showing another embodiment with fin apertures of different sizes and spacing;
Figure 18 is a diagrammatic, cross-sectional view similar to Figure 10 showing yet another embodiment with fin apertures of both different sizes and different spacing;
Figure 19 is a plan view of a portion of a fin showing diamond-shaped apertures;
Figure 20 is a plan view similar to Figure 19 showing triangular-shaped apertures;
Figure 21 is a plan view similar to Figure 19 showing circular apertures; and
Figure 22 is a plan view similar to Figure 19 showing hourglass-shaped apertures.

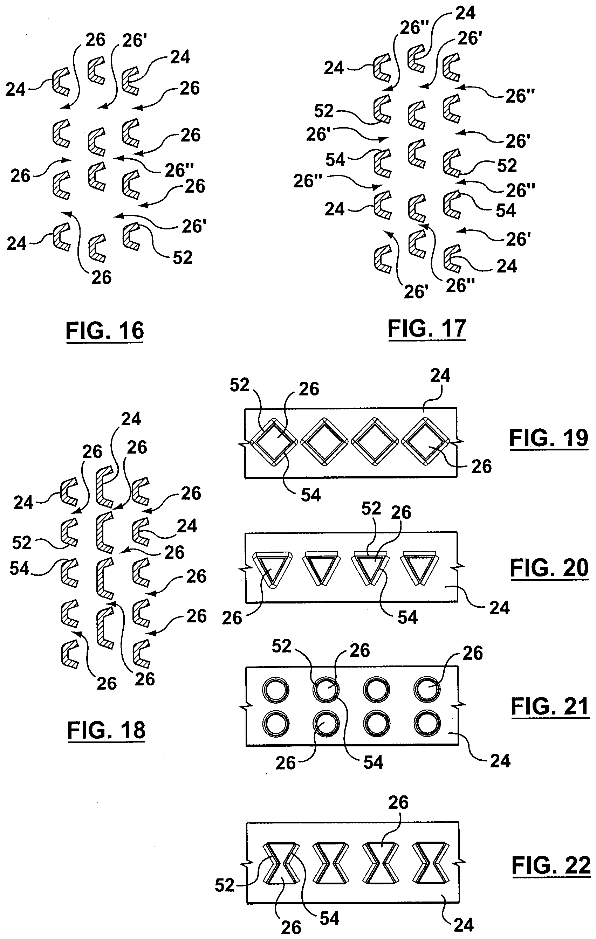

Figures 19-22 disclose embodiments that are not part of the claimed invention.

### DESCRIPTION OF THE PREFERRED EMBODIMENTS

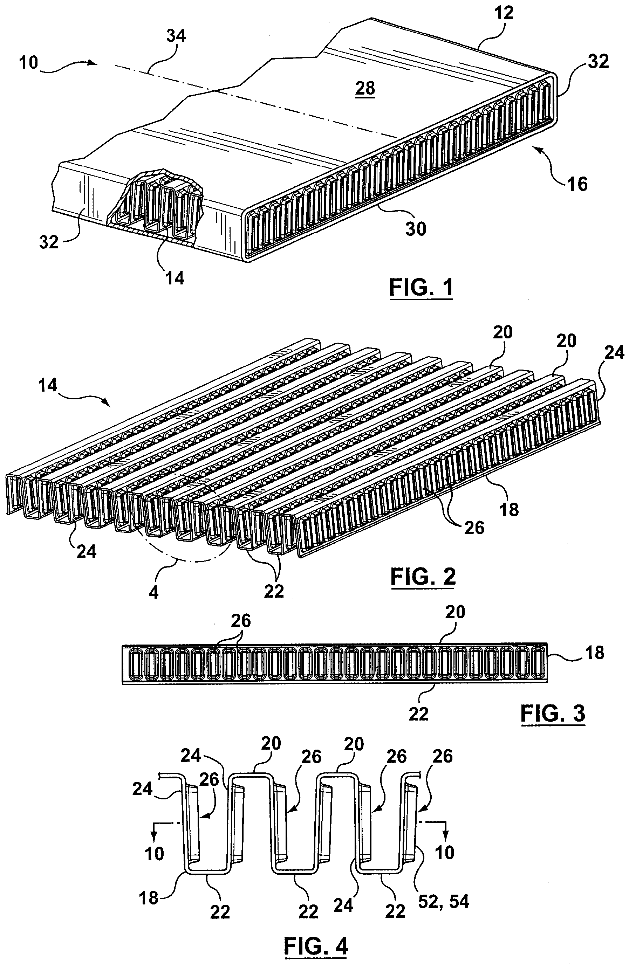

Referring firstly to Figure 1, a preferred embodiment of a simple exchanger according to the present invention is generally indicated by reference numeral 10. Heat exchanger 10 consists of a single tube 12 containing a turbulizer or heat transfer surface 14, and as such, could be used to heat or cool one fluid flowing through tube 12 transferring heat to or from the ambient fluid surround tube 12. More likely, however, is that tube 12 would be a building block, such that a plurality of such tubes 12 would be stacked vertically in spaced-apart relationship with corrugated fins located between tubes 12. The open ends 16 at each end of tube 12 would either form a respective fluid inlet and outlet for the heat exchanger or would be attached to communicate with manifolds or headers (not shown) to supply fluid to a stack of tubes 12 and receive the fluid from them.

Heat transfer surfaces 14 could also be attached to the outside surfaces of tubes 12, or located between stacked, spaced-apart tubes 12. Where heat transfer surfaces 14 are used inside tubes 12, they are often called turbulizers, because they produce or increase turbulence in the fluid flowing through the tubes. However, depending on the flow velocities, heat transfer surfaces 14 may just cause mixing in the fluid and not actually turbulence. For the purposes of this disclosure, the term "turbulizer" is intended to include heat transfer surfaces that operate in all flow conditions, turbulent or not.

Referring next to Figures 2, 3 and 4, it will be seen that heat transfer surface or turbulizer 14 is a corrugated member 18 having parallel, spaced-apart upper and lower ridges 20, 22, and planar fins 24 extending between the ridges 20, 22. Upper and lower ridges 20, 22 are generally flat in the embodiment shown in Figures 2 and 4, and planar fins 24 are generally upright or vertical and parallel.

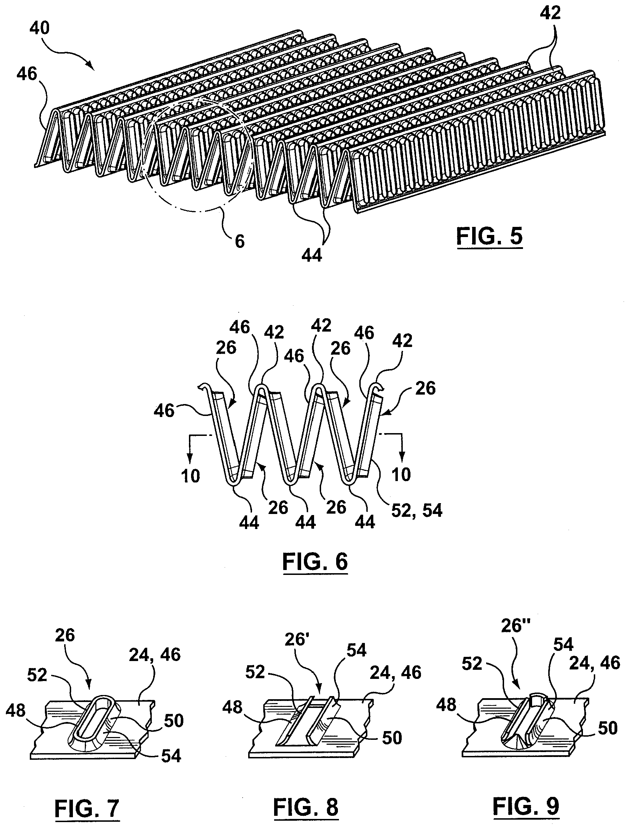

Planar fins 24 are formed with a plurality of spaced-apart, "volcano-like" piercings or apertures 26. Apertures 26 are elongated, having a longitudinal axis extending in a direction transverse to ridges 20, 22. Apertures 26 will be described further below in connection with Figure 7, 8 and 9.

It will be appreciated that tube 12 as shown in Figure 1 normally would be an elongate tube having top and bottom or first and second, spaced-apart walls 28 and 30 and longitudinal side walls 32. The turbulizer's upper and lower ridges 20, 22 normally are in contact with the inside surfaces of first and second walls 28, 30 and if heat exchanger 10 is made of aluminum, the turbulizer ridges 20, 22 normally would be brazed to first and second walls 28, 30. As seen in Figure 1, turbulizer 14 is arranged in tube 12 such that the upper and lower ridges 20, 22 are disposed transversely to the longitudinal axis 34 of tube 12. Flow through tube 12 would thus be perpendicular to ridges 20, 22. This is referred to as the high pressure drop direction of turbulizer 14. The high pressure drop direction is transverse to planar fins 24, and apertures 26 extend in this high pressure drop direction. However, turbulizer 14 also has a low pressure drop direction parallel to planar fins 24. Turbulizer 14 could be turned 90 degrees, so that upper and lower ridges 20, 22 extend parallel to the longitudinal axis 34 of tube 12. Apertures 26 would then extend transversely to the longitudinal flow direction through tube 12. Where fins 24 are upright and parallel, or perpendicular to the tube walls 28, 30, flow through the apertures 26 would be generally perpendicular or normal to the fins 24 as well.

Referring next to Figures 5 and 6, a heat transfer surface or turbulizer 40 is shown which is similar to turbulizer 14, except that the upper and lower spaced-apart ridges 42, 44 are rounded and the planar fins 46 are inclined with respect to one another. The fins thus would also be inclined with respect to tube walls 28, 30.

Referring next to Figures 7, 8 and 9, apertures 26 have opposed peripheral edge portions 48, 50. Peripheral edge portions 48, 50 have respective flanges 52, 54 that extend transversely from planar fins 24, 46. In

Figures 7 to 9, the transverse flanges 52, 54 associated with each aperture 26 are angled slightly with respect to one another. However, transverse flanges 52, 54 could be made perpendicular to planar fins 24, 46. Even where the flanges 52, 54 are angled with respect to one another as shown in Figures 7 to 9, the flanges are considered to be generally perpendicular to the planar fins 24, 46 for the purposes of this specification.

In Figure 7, it will be seen that the flanges associated with apertures 26 are continuous around the periphery of the apertures 26. This configuration is what gives rise to the reference to apertures 26 as being "volcano-like" as mentioned above. In Figures 8 and 9, the flanges associated with each aperture 26' and 26" are split or interrupted around the periphery of the apertures. This results from the method of forming the apertures, as will be described further below.

In the embodiments shown in Figures 4 and 6, all of the apertures 26, or at least the flanges 52, 54, extend in the same direction in the turbulizer. As mentioned above, flow through these apertures is referred to as being in the high pressure drop direction. Actually, the pressure drop where the flow is from right to left in Figures 4 and 6 is slightly higher than where the flow is from left to right. In the embodiment shown in Figure 4, the flanges 52, 54 on alternating planar fins 24 could extend in opposite directions in the turbulizer. This could also be done in the Figure 6 embodiment if the fins 24 are spaced far enough apart that the flanges 52, 54 would not interfere with one another in adjacent fins. Where the flanges 52, 54 extend in opposite directions in alternating planar fins 24, the pressure drop would be the same going either way in the high pressure drop direction. Turbulizers 14 and 40 could be located inside tubes 12, so that the flow through the turbulizers is in either direction through apertures 26.

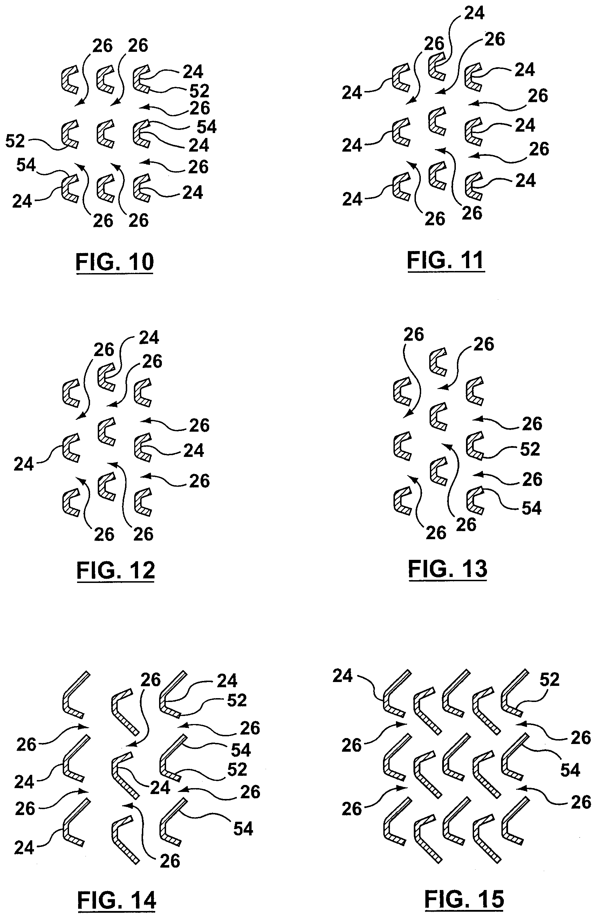

Referring next to Figures 10 to 13, Figure 10 corresponds to the arrangement of the apertures as indicated in Figures 2 and 5, where all of the apertures 26 are aligned in the longitudinal direction of heat exchanger tube 12. Apertures 26 are thus aligned in the high pressure drop direction of heat exchanger 10 and some part of the flow through tubes 12 can pass straight through the apertures 26. In Figure 11, the apertures 26 are slightly offset from the apertures 26 in the next adjacent planar fin 24. In Figure 12, the apertures 26 are even more offset in respect of the apertures 26 in the next adjacent planar fins 24, and in Figure 13, apertures 26 are fully offset. In the embodiments shown in Figures 11 to 13, flow through turbulizers 14 and 40 would take on an increasingly serpentine flow path from Figure 11 to Figure 13. It will be appreciated that apertures 26 can be aligned or offset when the turbulizers 14, 40 are orientated in either the high or low pressure drop direction in the heat exchanger or tubes 12.

Figure 14 illustrates that the flanges 52, 54 associated with each aperture 26 could be disposed at different angles relative to planar fins 24. Further, the flanges 52, 54 associated with each aperture 26 could be of different length, width or height. Similarly, the flanges associated with different apertures could also be of different length, width or height. Further, the apertures 26 could be spaced differently, as described further below. The apertures in planar fins 24 could also be located in spaced-apart groups. Figure 15 illustrates that the fin and aperture density could also be varied, if desired, Figure 15 having more fins and apertures than previously described embodiments, and thus having a higher fin and aperture density.

Figure 16 is similar to Figures 10 to 13, but it shows that some of the apertures 26' could be wider or larger than apertures 26, and some of the apertures 26" could be narrower or smaller than apertures 26. In Figure 16, every other fin has these larger and smaller apertures 26' and 26".

In Figure 17, the apertures in alternating fins 24 are of different sizes, and are also spaced apart differently in adjacent planar fins 24.

Figure 18 shows that the apertures 26, can be spaced apart differently in adjacent or alternating planar fins 24.

Figure 19 shows that the apertures 26 could be diamond shaped or square in plan view.

Figure 20 shows that the apertures 26 could be triangular shaped. Preferably the apertures in alternating rows would be inverted (not shown).

Figure 21 shows that the apertures 26 could be circular in shape. Although two rows of apertures 26 are shown in fins 24, a single row of apertures 26 could be provided as well.

Figure 22 shows that apertures 26 could be hourglass shaped.

Figures 19-22 disclose embodiments that are not part of the claimed invention.

It will be appreciated that the aperture shapes and sizes shown in the drawings could be mixed and matched as desired, as could the size and spacing of the apertures, to give any particular flow pattern desired through the heat transfer surfaces 14.

The method of making heat transfer surfaces or turbulizers 14 and 40 is to first start with a sheet of material, such as aluminum, copper or stainless steel. The sheet of material would then be pierced to form spaced-apart, parallel rows of spaced-apart apertures. In the case of the embodiments shown in Figures 7 to 9, the apertures could start by making a slit and then expanding the slit to form the peripheral flanges 52, 54. If the material is soft enough, or the apertures are small enough, a continuous peripheral flange could be formed as indicated in Figure 7. If the material is more brittle or the apertures are larger, an aperture 26" would be formed as indicated in Figure 9 wherein the aperture peripheral flanges split and become discontinuous or jagged during formation. Figure 9 shows two different shapes (square and triangular) for the end portions of the peripheral flanges. Normally, it would be one or the other for both end portions, but they could be different, as indicated. In the Figure 8 embodiment, an H-type slit would be made in the material and the slit opened up or expanded to form the opposed peripheral flange portions 52, 54. Where the apertures 26 are other shapes, such as are shown in Figures 19 to 22, appropriate piercings would be made, so that when opened up, these shapes would be produced.

Once the apertures are formed in the desired configuration, the sheet of material is then bent along lines parallel to the rows of apertures. The bend lines would be spaced between the rows of apertures, thereby forming the ridges 20, 22 or 42, 44 along the bend lines and the planar fins 24 extending between the ridges.

To form the embodiment shown in Figure 5, the sheet of material would be bent in opposite transverse directions on alternating bend lines. To make the embodiment shown in Figure 2, the sheet would be bent along two parallel bend lines between each row of apertures 26, thereby forming the ridges 20, 22 with generally flat peaks. The sheet in the Figure 2 embodiment would be bent in the same transverse direction along the parallel bend lines between alternating rows of apertures 26, or this double bend could be produced between only some of the adjacent rows of apertures 26, with the sheet being bent along a single bend line between other adjacent rows of apertures 26, thus producing a combination of the configurations shown in Figures 2 and 5.

Normally, the slitting of the sheet of material and the formation of the flanged apertures 26 is done in a single operation. The sheet can be pierced in the same transverse direction for all the apertures, or the sheet can be pierced in opposite transverse directions in adjacent rows of apertures. The sheet of material may be pierced and bent simultaneously, or in separate operations.

As mentioned above, the sheet of material can be pierced to form spaced-apart groups of apertures in each row of apertures. Further, the sheet could be pierced in opposite transverse directions in adjacent groups of apertures in each row of apertures. If the sheet material is soft enough, the sheet material may be stretched while the apertures are being pierced, thereby producing flanges 52, 54 that are elongated or wider or higher than normally would be the case. As indicated above, the apertures 26 are elongate having a longitudinal axis extending in a transverse direction to the ridges 20, 22 and 42, 44.

If it is desired to have the planar flanges 24 closer together, the turbulizer could be gathered together after the sheet is bent transversely along the bend lines. In the embodiment shown in Figure 4, the planar fins 24 could be angled with respect to one another and with respect to the first and second walls 28, 30 of tubes 12, or they could be substantially perpendicular and parallel. In forming the turbulizer shown in Figure 4, the sheet of material could be bent until the planar fins 24 are angled, and then the turbulizer gathered together to make the planar fins parallel to one another.

Having described preferred embodiments of the invention, it will be appreciated that various modifications may be made to the structures described above. For example, both types of heat transfer surfaces 14 and 40 could be used in the same tube 12, and they could be orientated differently, so that some of them are in the high pressure drop direction and some of them are in the low pressure drop direction. Flanges 52, 54 could extend in opposite directions in different sections or in different planar fins 24 of the heat transfer surfaces, or portions of same, to vary the pressure drop as desired. Multiple sections of a same type of heat transfer surface could be used in each tube 12, again with some of them orientated in the high pressure drop direction and some of them orientated in the low pressure drop direction. Further, two or more layers of heat transfer surfaces could be located in each tube 12, again with the type and orientation mixed and matched, as desired. Also, the heat transfer surfaces of this invention could be used between the tubes, and they could be used in air-to-air type heat exchangers to increase mixing or turbulence in the fluids flowing through or around the heat exchangers. Finally, the tubes 12, need not be tubes in the strict sense. They could be formed of mating plate pairs, or a pan and cover construction, or some other structure, as desired.

From the foregoing, it will be evident to persons of ordinary skill in the art that the scope of the present invention is limited only by the accompanying claims, purposively construed.

## Claims

1. A heat transfer surface (14, 40) for a heat exchanger (10) comprising:
a corrugated member having parallel, spaced-apart ridges (20, 22, 42, 44) and planar fins (24, 46) extending therebetween;
the planar fins (24, 46) being formed with spaced-apart apertures (26) having opposed peripheral edge portions (48, 50); and
said opposed peripheral edge portions of each aperture (26) including respective flanges (52, 54) that extend outwardly from a single side of the planar fin (24, 46) forming said aperture (26); and
wherein the apertures (26) are elongated, having a longitudinal axis extending in a direction transverse to the ridges (20, 22, 42, 44); and
wherein the heat transfer surface (14, 40) has a low pressure drop direction parallel to the planar fins (24, 46) and a high pressure drop direction transverse to the planar fins (24, 46), the apertures (26) being oriented in and the flanges (52, 54) extending in the high pressure drop direction.

2. A heat transfer surface (14, 40) as claimed in claim 1 wherein the flanges (52, 54) associated with each aperture (26) are angled with respect to one another.

3. A heat transfer surface (14, 40) as claimed in claim 1 wherein the flanges (52, 54) associated with each aperture are continuous around the periphery of the aperture (26).

4. A heat transfer surface (14, 40) as claimed in claim 1 wherein the flanges (52, 54) associated with each aperture (26) are interrupted around the periphery of the aperture (26).

5. A heat transfer surface (14, 40) as claimed in claim 1 wherein the heat transfer surface (14, 40) has a low pressure drop direction parallel to the planar fins (24, 46) and a high pressure drop direction transverse to the planar fins (24, 46), and wherein the apertures (26) are offset in the high pressure drop direction.

6. A heat transfer surface (14, 40) as claimed in claim 1 wherein the flanges (52, 54) all extend in the same direction in the heat transfer surface (14, 40).

7. A heat transfer surface (14, 40) as claimed in claim 1 wherein the flanges (52, 54) on alternating planar fins (24, 46) extend in opposite directions in the heat transfer surface (14, 40).

8. A heat transfer surface (14, 40) as claimed in claim 1 wherein the planar fins (24, 46) are inclined with respect to one another.

9. A heat transfer surface (14, 40) as claimed in claim 1 wherein the planar fins (24, 46) are parallel to one another.

10. A heat transfer surface (14, 40) as claimed in claim 1 wherein at least some of the flanges (52, 54) are generally perpendicular to the planar fins (24, 46).

11. A heat transfer surface (14, 40) as claimed in claim 2 wherein the flanges (52, 54) associated with each aperture (26) are disposed at different angles relative to the planar fins (24, 46).

12. A heat transfer surface (14, 40) as claimed in claim 1 wherein the flanges (52, 54) associated with each aperture (26) are of different widths.

13. A heat transfer surface (14, 40) as claimed in claim 1 wherein the apertures (26) in each planar fin (24, 46) are located in spaced-apart groups.

14. A heat transfer surface (14, 40) as claimed in claim 1 wherein the apertures (26) are different shapes.

15. A heat transfer surface (14, 40) as claimed in claim 1 wherein the apertures (26) are different sizes.

16. A heat transfer surface (14, 40) as claimed in claim 1 wherein the apertures are spaced apart differently in adjacent planar fins (24, 46).

17. A heat exchanger (10) comprising:
a generally flat tube (12) having first and second, spaced-apart walls (28, 30);
a corrugated heat transfer surface (14, 40) located in said tube (12), the heat transfer surface (14, 40) including parallel, spaced-apart ridges (20, 22, 42, 44) with planar fins (24, 46) extending therebetween, alternating ridges (20, 22, 42, 44) being in contact respectively with the first and second walls (28, 30);
the planar fins (24, 46) being formed with spaced-apart apertures (26) having opposed peripheral edge portions (48, 50); and
said opposed peripheral edge portions (48, 50) of each aperture (26) including respective flanges (52, 54) extending outwardly away from a single side of the planar fin (24, 46) forming said aperture (26);
wherein the tube (12) has a longitudinal axis (34), the ridges (20, 22) of the heat transfer surface (14, 40) being oriented perpendicular to said longitudinal axis (34) and flow through the tube (12) being perpendicular to said ridges (20, 22); and
wherein the apertures (26) are elongated, having a longitudinal axis extending in a direction transverse to the ridges and to the longitudinal flow direction of the tube (12).

18. A heat exchanger (10) as claimed in claim 17 wherein the planar fins (24, 46) are inclined with respect to the spaced-apart walls (28, 30).

19. A heat exchanger (10) as claimed in claim 17 wherein the planar fins (24, 46) are perpendicular to the spaced-apart walls (28, 30).

20. A heat exchanger (10) as claimed in claim 17 wherein the tube (12) has respective end portions (16) defining a fluid inlet and a fluid outlet for the heat exchanger.

21. A heat exchanger (10) as claimed in claim 18 wherein all of said flanges (52, 54) extend generally in the same direction inside the tube (12).

22. A heat exchanger (10) as claimed in claim 17 wherein the flanges (52, 54) associated with each aperture (26) are continuous around the periphery of the aperture (26).

23. A heat exchanger (10) as claimed in claim 17 wherein the flanges (52, 54) associated with each aperture (26) are interrupted around the periphery of the aperture (26).

24. A heat exchanger (10) as claimed in claim 23 wherein the flanges (52, 54) associated with each aperture (26) are angled with respect to one another.

## Patentansprüche

1. Wärmeübertragungsfläche (14, 40) für einen Wärmetauscher (10), welche aufweist:
ein gewelltes Teil mit parallelen, im gegenseitigen Abstand angeordneten Stegen (20, 22, 42, 44) und ebenen Rippen (24, 46), die sich zwischen diesen erstrecken;
wobei die ebenen Rippen (24, 46) mit im gegenseitigen Abstand angeordneten Öffnungen (26) gebildet sind, die gegenüberliegende Umfangskantenbereiche (48, 50) haben; und
die gegenüberliegenden Umfangskantenbereiche jeder Öffnung (26) jeweils Flansche (52, 54) enthalten, die sich von einer einzigen Seite der ebenen Rippe (24, 46), die die Öffnung (26) bildet, auswärts erstrecken; und
wobei die Öffnungen (26) länglich sind und eine sich in einer Richtung quer zu den Stegen (20, 22, 42, 44) erstreckende Längsachse haben; und
wobei die Wärmeübertragungsfläche (14, 40) eine Richtung mit niedrigem Druckabfall parallel zu den ebenen Rippen (24, 46) und eine Richtung mit hohem Druckabfall quer zu den ebenen Rippen (24, 46) hat und die Öffnungen (26) in der Richtung des hohen Druckabfalls orientiert sind und die Flansche (52, 54) sich in dieser erstrecken.

2. Wärmeübertragungsfläche (14, 40) nach Anspruch 1, bei der die Flansche (52, 54), die mit jeder Öffnung (26) assoziiert sind, mit Bezug zueinander abgewinkelt sind.

3. Wärmeübertragungsfläche (14, 40) nach Anspruch 1, bei der die Flansche (52, 54), die mit jeder Öffnung assoziiert sind, kontinuierlich um den Umfang der Öffnung (26) herum sind.

4. Wärmeübertragungsfläche (14, 40) nach Anspruch 1, bei der die Flansche (52, 54), die mit jeder Öffnung (26) assoziiert sind, um den Umfang der Öffnung (26) herum unterbrochen sind.

5. Wärmeübertragungsfläche (14, 40) nach Anspruch 1, bei der die Wärmeübertragungsfläche (14, 40) eine Richtung mit niedrigem Druckabfall parallel zu den ebenen Rippen (24, 46) und eine Richtung mit hohem Druckabfall quer zu den ebenen Rippen (24, 46) hat, wobei die Öffnungen (26) in der Richtung mit hohem Druckabfall versetzt sind.

6. Wärmeübertragungsfläche (14, 40) nach Anspruch 1, bei der die Flansche (52, 54) sich sämtlich in derselben Richtung in der Wärmeübertragungsfläche (14, 40) erstrecken.

7. Wärmeübertragungsfläche (14, 40) nach Anspruch 1, bei der die Flansche (52, 54) auf abwechselnden ebenen Rippen (24, 46) sich in entgegengesetzten Richtungen in der Wärmeübertragungsfläche (14, 40) erstrecken.

8. Wärmeübertragungsfläche (14, 40) nach Anspruch 1, bei der die ebenen Rippen (24, 46) mit Bezug zueinander geneigt sind.

9. Wärmeübertragungsfläche (14, 40) nach Anspruch 1, bei der die ebenen Rippen (24, 46) parallel zueinander sind.

10. Wärmeübertragungsfläche (14, 40) nach Anspruch 1, bei der zumindest einige der Flansche (52, 54) im Allgemeinen senkrecht zu den ebenen Rippen (24, 46) sind.

11. Wärmeübertragungsfläche (14, 40) nach Anspruch 2, bei der die Flansche (52, 54), die mit jeder Öffnung (26) assoziiert sind, unter verschiedenen Winkeln relativ zu den ebenen Rippen (24, 46) angeordnet sind.

12. Wärmeübertragungsfläche (14, 40) nach Anspruch 1, bei der die Flansche (52, 54), die mit jeder Öffnung (26) assoziiert sind, unterschiedliche Breiten haben.

13. Wärmeübertragungsfläche (14, 40) nach Anspruch 1, bei der sich die Öffnungen (26) in jeder ebenen Rippe (24, 46) in in gegenseitigem Abstand angeordneten Gruppen befinden.

14. Wärmeübertragungsfläche (14, 40) nach Anspruch 1, bei der die Öffnungen (26) unterschiedlich geformt sind.

15. Wärmeübertragungsfläche (14, 40) nach Anspruch 1, bei der die Öffnungen (26) unterschiedliche Größen haben.

16. Wärmeübertragungsfläche (14, 40) nach Anspruch 1, bei der die Öffnungen in benachbarten ebenen Rippen (24, 46) einen unterschiedlichen gegenseitigen Abstand haben.

17. Wärmetauscher (10), welcher aufweist:
ein im Allgemeinen flaches Rohr (12) mit einer ersten und einer zweiten Wand (28, 30), die einen gegenseitigen Abstand aufweisen;
eine gewellte Wärmeübertragungsfläche (14, 40), die sich in dem Rohr (12) befindet, wobei die Wärmeübertragungsfläche (14, 40) parallele, im gegenseitigen Abstand angeordnete Stege (20, 22, 42, 44) mit ebenen Rippen (24, 46), die sich zwischen diesen erstrecken, enthält und abwechselnde Stege (20, 22, 42, 44) jeweils in Kontakt mit der ersten und der zweiten Wand (28, 30) sind;
wobei die ebenen Rippen (24, 46) mit im gegenseitigen Abstand angeordneten Öffnungen (26) gebildet sind, die gegenüberliegende Umfangskantenbereiche (48, 50) haben; und
wobei die gegenüberliegenden Umfangskantenbereiche (48, 50) jeder Öffnung (26) jeweils Flansche (52, 54) enthalten, die sich von einer einzigen Seite der ebenen, die Öffnung (26) bildenden Rippe (24, 46) auswärts erstrecken;
wobei das Rohr (12) eine Längsachse (34) hat, die Stege (20, 22) der Wärmeübertragungsfläche (14, 40) senkrecht zu der Längsachse (34) orientiert sind und eine Strömung durch das Rohr (12) senkrecht zu den Stegen (20, 22) verläuft; und
wobei die Öffnungen (26) länglich sind und eine sich in einer Richtung quer zu den Stegen und zu der Längsströmungsrichtung des Rohrs (12) erstreckende Längsachse haben.

18. Wärmetauscher (10) nach Anspruch 17, bei dem die ebenen Rippen (24, 46) in Bezug auf die im gegenseitigen Abstand angeordneten Wände (28, 30) geneigt sind.

19. Wärmetauscher (10) nach Anspruch 17, bei dem die ebenen Rippen (24, 46) senkrecht zu den im gegenseitigen Abstand angeordneten Wänden (28, 30) sind.

20. Wärmetauscher (10) nach Anspruch 17, bei dem das Rohr (12) jeweilige Endbereiche (16) hat, die einen Fluideinlass und einen Fluidauslass für den Wärmetauscher definieren.

21. Wärmetauscher (10) nach Anspruch 18, bei dem sämtliche Flansche (52, 54) sich im Allgemeinen in derselben Richtung innerhalb des Rohrs (12) erstrecken.

22. Wärmetauscher (10) nach Anspruch 17, bei dem die mit jeder Öffnung (26) assoziierten Flansche (52, 54) kontinuierlich um den Umfang der Öffnung (26) herum sind.

23. Wärmetauscher (10) nach Anspruch 17, bei dem die mit jeder Öffnung (26) assoziierten Flansche (52, 54) um den Umfang der Öffnung (26) herum unterbrochen sind.

24. Wärmetauscher (10) nach Anspruch 23, bei dem die mit jeder Öffnung (26) assoziierten Flansche (52, 54) mit Bezug zueinander abgewinkelt sind.

## Revendications

1. Surface de transfert thermique (14, 40) pour un échangeur thermique (10) comprenant :
un élément ondulé comportant des nervures espacées parallèles (20, 22, 42, 44) et des ailettes planes (24, 46) qui s'étendent entre ;
les ailettes planes (24, 46) étant formées de manière à comporter des ouvertures espacées (26) qui comportent des parties de bord périphériques opposées (48, 50) ; et
lesdites parties de bord périphériques opposées de chaque ouverture (26) incluant des flancs respectifs (52, 54) qui s'étendent vers l'extérieur depuis un unique côté de l'ailette plane (24, 26) en formant ladite ouverture (26) ; et dans laquelle :
les ouvertures (26) sont allongées et elles comportent un axe longitudinal qui s'étend dans une direction transversale par rapport aux nervures (20, 22, 42, 44) ; et dans laquelle :
la surface de transfert thermique (14, 40) présente une direction de chute de pression faible qui est parallèle aux ailettes planes (24, 46) et une direction de chute de pression élevée qui est transversale par rapport aux ailettes planes (24, 46), les ouvertures (26) étant orientées dans la direction de chute de pression élevée et les flancs (52, 54) s'étendant suivant cette même direction.

2. Surface de transfert thermique (14, 40) selon la revendication 1, dans laquelle les flancs (52, 54) associés à chaque ouverture (26) sont angulés l'un par rapport à l'autre.

3. Surface de transfert thermique (14, 40) selon la revendication 1, dans laquelle les flancs (52, 54) associés à chaque ouverture sont continus sur la périphérie de l'ouverture (26).

4. Surface de transfert thermique (14, 40) selon la revendication 1, dans laquelle les flancs (52, 54) associés à chaque ouverture (26) sont interrompus sur la périphérie de l'ouverture (26).

5. Surface de transfert thermique (14, 40) selon la revendication 1, dans laquelle la surface de transfert thermique (14, 40) présente une direction de chute de pression faible qui est parallèle aux ailettes planes (24, 46) et une direction de chute de pression élevée qui est transversale par rapport aux ailettes planes (24, 46), et dans laquelle les ouvertures (26) sont décalées dans la direction de chute de pression élevée.

6. Surface de transfert thermique (14, 40) selon la revendication 1, dans laquelle les flancs (52, 54) s'étendent tous dans la même direction dans la surface de transfert thermique (14, 40).

7. Surface de transfert thermique (14, 40) selon la revendication 1, dans laquelle les flancs (52, 54) sur des ailettes planes alternées (24, 46) s'étendent dans des directions opposées dans la surface de transfert thermique (14, 40).

8. Surface de transfert thermique (14, 40) selon la revendication 1, dans laquelle les ailettes planes (24, 46) sont inclinées les unes par rapport aux autres.

9. Surface de transfert thermique (14, 40) selon la revendication 1, dans laquelle les ailettes planes (24, 46) sont parallèles les unes aux autres.

10. Surface de transfert thermique (14, 40) selon la revendication 1, dans laquelle au moins certains des flancs (52, 54) sont de façon générale perpendiculaires aux ailettes planes (24, 46).

11. Surface de transfert thermique (14, 40) selon la revendication 2, dans laquelle les flancs (52, 54) associés à chaque ouverture (26) sont disposés selon des angles différents par rapport aux ailettes planes (24, 46).

12. Surface de transfert thermique (14, 40) selon la revendication 1, dans laquelle les flancs (52, 54) associés à chaque ouverture (26) sont de largeurs différentes.

13. Surface de transfert thermique (14, 40) selon la revendication 1, dans laquelle les ouvertures (26) dans chaque ailette plane (24, 46) sont placées selon des groupes espacés.

14. Surface de transfert thermique (14, 40) selon la revendication 1, dans laquelle les ouvertures (26) sont de différentes formes.

15. Surface de transfert thermique (14, 40) selon la revendication 1, dans laquelle les ouvertures (26) sont de différentes dimensions.

16. Surface de transfert thermique (14, 40) selon la revendication 1, dans laquelle les ouvertures (26) sont espacées de façon différente dans des ailettes planes adjacentes (24, 46).

17. Echangeur thermique (10) comprenant :
un tube de forme générale plate (12) comportant des première et seconde parois espacées (28, 30) ;
une surface de transfert thermique ondulée (14, 40) placée dans ledit tube (12), la surface de transfert thermique (14, 40) incluant des nervures espacées parallèles (20, 22, 42, 44), des ailettes planes (24, 46) qui s'étendent entre, des nervures alternées (20, 22, 42, 44) étant respectivement en contact avec les première et seconde parois (28, 30) ;
les ailettes planes (24, 46) étant formées de manière à comporter des ouvertures espacées (26) qui comportent des parties de bord périphériques opposées (48 ; 50) ; et
lesdites parties de bord périphériques opposées de chaque ouverture (26) incluant des flancs respectifs (52, 54) qui s'étendent vers l'extérieur depuis un unique côté de l'ailette plane (24, 26) en formant ladite ouverture (26) ; dans lequel :
le tube (12) comporte un axe longitudinal (34), les nervures (20, 22) de la surface de transfert thermique (14, 40) étant orientées perpendiculairement audit axe longitudinal (34) et le flux au travers du tube (12) étant perpendiculaire auxdites nervures (20, 22) ; et dans lequel :
les ouvertures (26) sont allongées et comportent un axe longitudinal qui s'étend dans une direction transversale par rapport aux nervures et par rapport à la direction de flux longitudinale du tube (12).

18. Echangeur thermique (10) selon la revendication 17, dans lequel les ailettes planes (24, 46) sont inclinées par rapport aux parois espacées (28, 30).

19. Echangeur thermique (10) selon la revendication 17, dans lequel les ailettes planes (24, 46) sont perpendiculaires aux parois espacées (28, 30).

20. Echangeur thermique (10) selon la revendication 17, dans lequel le tube (12) comporte des parties d'extrémité respectives (16) qui définissent une entrée de fluide et une sortie de fluide pour l'échangeur thermique.

21. Echangeur thermique (10) selon la revendication 18, dans lequel lesdits flancs (52, 54) s'étendent tous de façon générale dans la même direction à l'intérieur du tube (12).

22. Echangeur thermique (10) selon la revendication 17, dans lequel les flancs (52, 54) associés à chaque ouverture (26) sont continus sur la périphérie de l'ouverture (26).

23. Echangeur thermique (10) selon la revendication 17, dans lequel les flancs (52, 54) associés à chaque ouverture (26) sont interrompus sur la périphérie de l'ouverture (26).

24. Echangeur thermique (10) selon la revendication 23, dans lequel les flancs (52, 54) associés à chaque ouverture (26) sont angulés l'un par rapport à l'autre.
